# FASCICULE DE BREVET EUROPEEN

(11) **EP 3 464 078 B1**
(45) Date de publication et mention de la délivrance du brevet: **21.07.2021**
(21) Numéro de dépôt: 17724492.8
(22) Date de dépôt: 15.05.2017
(51) Int. Cl.: B65B 43/52, B65B 61/20, B65B 61/22, B65B 43/10, B65B 43/18, B65B 41/06, B25J 15/06, B65H 3/08, B65G 47/91, B31D 5/00, B25J 15/02, B25J 15/00, B65B 25/14, B65B 5/10

(54) **TETE DE SAISIE ET DE PLIAGE DE FEUILLES D'ENCART, DISPOSITIF D'ENCARTAGE, STATION DE REMPLISSAGE ET PROCEDE DE SAISIE, PLIAGE ET CHARGEMENT D'UNE FEUILLE D'ENCART**
KOPF ZUM AUFNEHMEN UND FALTEN VON EINLAGEBÖGEN, EINLAGEVORRICHTUNG, FÜLLSTATION UND AUFNAHME-, FALT- UND BELADEVERFAHREN EINES EINLAGEBOGENS
HEAD FOR PICKING UP AND FOLDING INSERT SHEETS, INSERT DEVICE, FILLING STATION AND METHOD FOR PICKING UP, FOLDING AND LOADING AN INSERT SHEET

(30) Priorité: 27.05.2016 EP 16020195
(43) Date de publication de la demande: 10.04.2019
(73) Titulaire: BOBST MEX SA, 1031 Mex (CH)
(72) Inventeur: BRIZZI, Nicolas, CH-1920 Martigny (CH)
(74) Mandataire: Navarro, Asa Maria Thérèse
(86) Numéro de dépôt international: PCT/EP2017/025127
(87) Numéro de publication internationale: WO 2017/202500

(56) Documents cités:
- EP-A1- 2 394 800
- DE-A1- 19 720 650
- FR-A1- 2 816 232
- US-A1- 2008 121 537
- US-A1- 2009 133 524

## Description

La présente invention concerne une tête de saisie de feuilles d'encart pour l'encartage entre rangées de boites pliantes dans un récipient, les boites pliantes étant notamment confectionnées par une machine plieuse-colleuse. L'invention se rapporte également à une tête de saisie et de pliage d'encart pour l'encartage entre rangées de boites pliantes dans un récipient. L'invention concerne également un dispositif d'encartage, une station de remplissage de récipients par des boites pliantes et un procédé de saisie, pliage et chargement d'une feuille d'encart.

Les machines plieuses-colleuses collent et plient à plat des boites pliantes destinées à contenir des produits, tels que des plaquettes de médicaments ou autre, par exemple emballés par une industrie tierce. Les boites pliées à plat peuvent alors être stockées efficacement dans des récipients (également appelés containeurs) pour être acheminées vers l'industriel.

Le document DE19720650 décrit une tête de saisie, configurée pour plier des feuilles d'encarts et former des récipients contenant des boites pliantes.

Le document US2008121537 décrit un dispositif de saisie utilisant des cylindres linéaires pour effectuer un pliage d'une feuille d'encart.

Le document CH 659627 décrit un autre exemple de dispositif de remplissage de récipients par des boites pliantes en sortie d'une machine plieuse-colleuse. Les boites pliées sont mises en nappe puis acheminées par un transporteur de boites dans un récipient. Chaque récipient peut contenir un nombre important de boites pliées, tel que plusieurs dizaines ou centaines de boites.

Pour former des rangées de boites pliantes séparées et stables dans le récipient, un encartage s'avère nécessaire. L'encartage consiste à disposer un encart dans le récipient vide, pour former un intercalaire entre les rangées de boites pliantes. Cette opération d'insertion d'un encart est nécessaire pour éviter que les boîtes se croisent par exemple lors du transport du récipient rempli. Lorsque le client final reçoit le récipient rempli de boîtes, il doit pouvoir très facilement attraper et prendre les rangées de boîtes.

La feuille d'encart est une feuille de carton découpée et refoulée, généralement de manière à préformer trois lignes de pliage parallèles. Les lignes de refoulage peuvent être également préformée par demi coupe ou coupe pointillée. La feuille d'encart peut également être une simple feuille de carton plat aux dimensions correspondant aux dimensions du fond du récipient.

Lorsque les deux ailes latérales de la feuille d'encart sont rapprochées l'une contre l'autre, la feuille d'encart présente une forme tridimensionnelle avec un pli plan sensiblement perpendiculaire aux ailes. La dimension des ailes correspond à la dimension du fond du récipient de sorte que lorsque la feuille d'encart pliée est placée dans le récipient, le pli plan est maintenu à la verticale.

En production, à la fin du processus un opérateur est chargé d'insérer manuellement une feuille de séparation verticale entre deux rangées de boîtes. Les boites sont alors disposées selon deux rangées agencées de part et d'autre de la feuille de séparation verticale.

Cette opération d'encartage peut cependant s'avérer fastidieuse et fatigante pour l'opérateur du fait du caractère répétitif de la tâche. De plus l'opérateur a souvent des difficulté à séparer correctement les rangées de boîtes. L'intervention d'un opérateur peut limiter les cadences de production. En effet, une machine plieuse-colleuse peut alimenter une station de remplissage au rythme de 200000 boites par heure. L'opérateur peut ne pas pouvoir suivre cette cadence imposée par la machine plieuse-colleuse, ce qui peut entrainer des bourrages en fin de ligne, voire conduire à l'arrêt complet de la machine plieuse-colleuse.

### Résumé de l'invention

Un des buts de la présente invention est de proposer un dispositif et un procédé pour la saisie, le pliage et le chargement d'une feuille d'encart pliée dans un récipient permettant de résoudre au moins partiellement les inconvénients précités, notamment en évitant l'intervention d'un opérateur.

A cet effet, la présente invention a pour objet une tête de saisie de feuilles d'encart pour l'encartage entre rangées de boites pliantes dans un récipient selon la revendication 1 et ses revendications dépendantes en annexe.

L'actionneur pilotable comporte un moteur électrique et le mécanisme d'actionnement comporte une vis configurée pour être entrainée en rotation par le moteur électrique, la vis étant insérée dans un filetage de l'axe transversal de sorte qu'une rotation dans un premier sens du moteur électrique entraine une montée de l'axe transversal et une rotation dans le sens contraire entraine une descente de l'axe transversal.

Le mécanisme d'actionnement comporte au moins une rainure de guidage configurée pour coopérer avec une extrémité de l'axe transversal pour guider le déplacement vertical de l'axe transversal.

L'invention a aussi pour objet un dispositif d'encartage de feuilles d'encart caractérisé en ce qu'il comporte une tête de saisie et de pliage telle que décrite précédemment.

Le dispositif d'encartage peut comporter un moyen de déplacement pilotable configuré pour déplacer la tête de saisie et de pliage au moins selon un mouvement vertical et selon un mouvement horizontal.

Le dispositif d'encartage peut comporter une unité de pilotage configurée pour commander le moyen de déplacement pilotable et/ou le mécanisme d'actionnement et/ou la mise sous vide dans les premiers et deuxièmes éléments d'aspiration de la tête de saisie et de pliage.

L'invention a aussi pour objet une station de remplissage pour le remplissage de récipients par des boites pliantes, caractérisée en ce qu'elle comporte un dispositif d'encartage de feuilles d'encart tel que décrit précédemment.

L'invention a aussi pour objet un procédé de saisie, pliage et chargement d'une feuille d'encart par un dispositif d'encartage tel que décrit précédemment, selon la revendication 9 en annexe.

### Description sommaire des dessins

D'autres avantages et caractéristiques apparaîtront à la lecture de la description de l'invention, ainsi que sur les figures annexées qui représentent un exemple de réalisation non limitatif de l'invention et sur lesquelles :
- la Figure 1 montre des éléments d'une station de remplissage et notamment un transporteur-remplisseur de boites, un convoyeur de récipients et un dispositif d'encartage;
- la Figure 2a montre un exemple de récipient dont les parois latérales sont représentées en transparence, le récipient étant chargé de boites pliantes rangées de manière ordonnée avec une feuille d'encart pliée intercalée entre les deux rangées de boites;
- La Figure 2b montre un autre exemple de récipient dont les parois latérales sont représentées en transparence, le récipient étant chargé de boites pliantes rangées de manière ordonnée avec une feuille d'encart pliée intercalée entre les deux rangées de boites, et avec deux étages de boites pliantes une feuille d'encart pliée intercalée entre deux étages;
- les Figures 3a et 3b montrent une vue en coupe du récipient, des boites pliantes et des feuille d'encart des Figure 2a et 2b;
- la Figure 3b montre une vue similaire à la Figure 3a sur laquelle les boites pliantes ont été ôtées;
- la Figure 4a montre un schéma d'une feuille d'encart avant pliage, vue de dessus;
- la Figure 4b montre une vue en perspective de la feuille d'encart de la Figure 4a au cours du pliage;
- la Figure 5 montre une vue en perspective du dispositif d'encartage de la Figure 1 ;
- la Figure 6 montre une vue en perspective d'une tête de saisie et de pliage du dispositif d'encartage de la Figure 5 avec des éléments de capot représentés en transparence, les éléments d'aspiration étant représentés en position de saisie;
- la Figure 7a montre une vue de la tête de saisie et de pliage de la Figure 6 dont on a ôté les éléments de capot pour mieux visualiser un mécanisme d'actionnement;
- la Figure 7b montre une vue similaire à la Figure 7a avec les éléments d'aspiration en position de pliage;
- la Figure 8a montre une vue de côté de la tête de saisie et de pliage de la Figure 7a;
- la Figure 8b montre une vue de côté de la tête de saisie et de pliage de la Figure 7b;
- la Figure 9 montre une vue en perspective de la tête de saisie et de pliage de la Figure 7b ayant pivoté de 180° et portant une feuille d'encart pliée; et

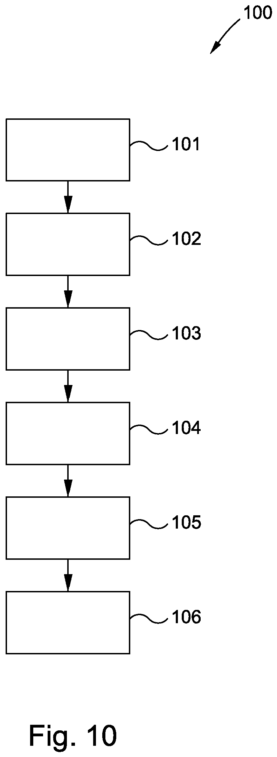

- la Figure 10 montre un organigramme des différentes étapes d'un procédé de saisie, pliage et chargement d'une feuille d'encart au moyen du dispositif d'encartage de la Figure 5.

Sur ces figures, les éléments identiques portent les mêmes numéros de référence. Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

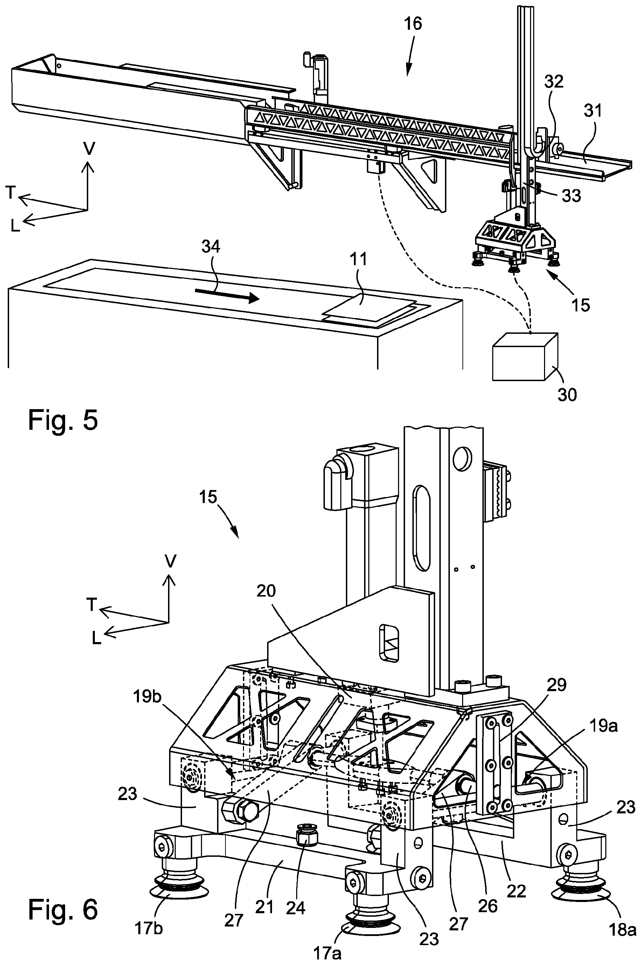

On désigne les directions longitudinale, verticale et transversale indiquées notamment sur la Fig. 5, par le trièdre (L, V, T). Le plan horizontal correspond au plan (L, T).

Les termes « supérieur » et « inférieur » sont définis en référence à la disposition des éléments dans une station de remplissage posée au sol.

### Exemples de mode de réalisation de l'invention

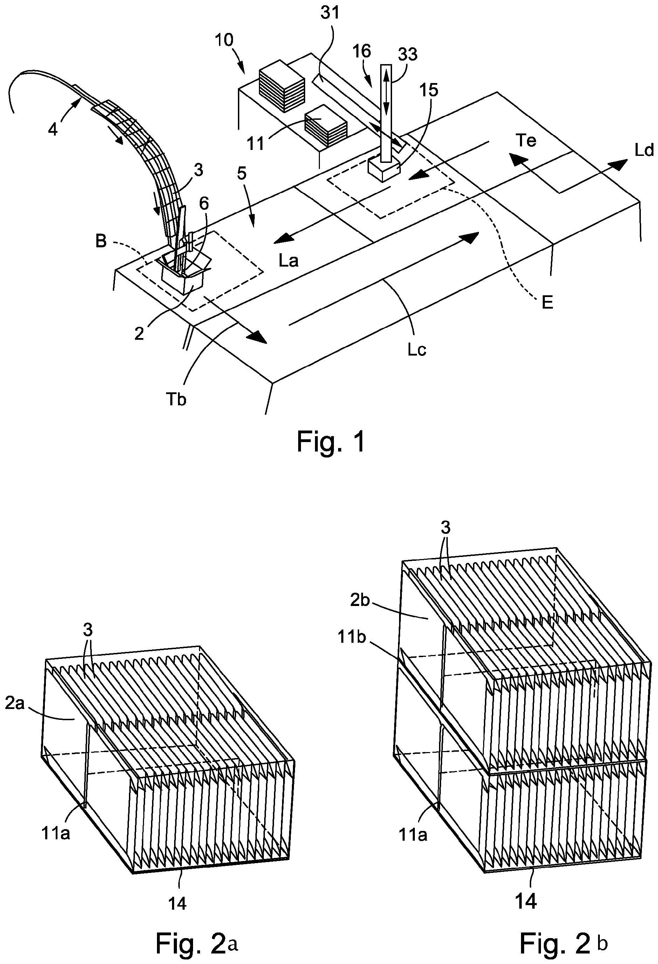

La Fig. 1 montre une vue générale des éléments d'une station de remplissage 1 de récipients 2 (également appelés containeurs) par des boites pliantes 3, la station 1 pouvant être placée à la sortie d'une machine plieuse-colleuse.

Les boites pliantes 3 peuvent être confectionnées par une machine plieuse-colleuse qui colle et plie à plat les boites 3 qui peuvent alors être stockées, collées et pliées avec un faible encombrement dans des récipients 2 pour être transportées. Le terme « boite pliante » désigne ici les boites pliantes pliées à plat pour être rangées dans un récipient 2.

Le récipient 2 est une boite de forme parallélépipédique pouvant contenir plusieurs boites pliantes 3. Le récipient 2 est par exemple en carton. Un récipient 2 rempli de deux rangées de boites pliantes 3 positionnées sur la tranche est montré à titre illustratif sur la Fig. 2.

Dans une station de remplissage 1, comme on peut le voir sur la Fig. 1, un convoyeur de récipients 5 achemine, par exemple au moyen d'un train de rouleaux, des récipients 2 vides vers une zone de remplissage B où les récipients 2 sont chargés de boites pliantes 3. Une fois chargé, le récipient 2 est déplacé de la zone de remplissage B sur un trajet d'évacuation Lc (flèche Tb), par exemple au moyen d'un système poussoir. Les récipients 2 chargés sont ensuite évacués vers une sortie 7 selon le trajet d'évacuation Lc, par exemple parallèle au trajet d'acheminement La transportant le récipient 2 vers la zone de remplissage B, mais de sens contraire. Les récipients 2 chargés sont évacués en dehors du convoyeur 5 (Flèche Ld).

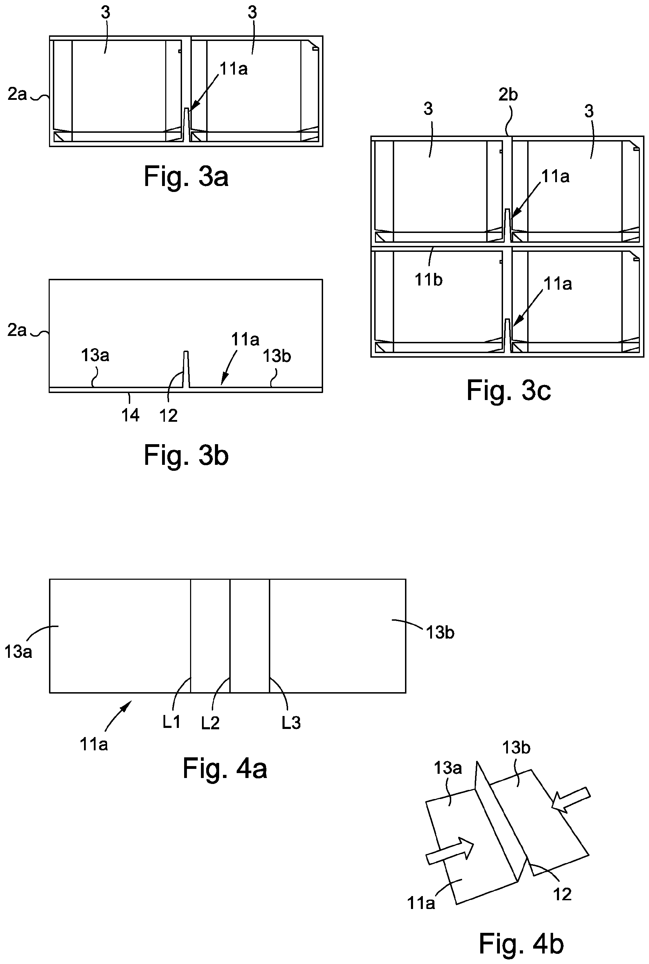

Dans une variante de réalisation, les récipients 2b peuvent effectuer un nouveau cycle de chargement en étant réintroduit en début du convoyage pour effectuer un nouveau chargement avec un deuxième étage de boîtes (Flèche Te). Le récipient 2b présente une capacité et ainsi une hauteur supérieure pour permettre l'entrée du deuxième étage de boîtes (voir Figs. 2a et 3c).

Un transporteur-remplisseur de boites 4 est configuré pour saisir les boîtes pliantes 3 par exemple mises en nappe en sortie de la machine plieuse-colleuse et pour les transférer vers la zone de remplissage B. Les boites pliantes 3 ayant suivi une trajectoire sensiblement en forme d'arche sont disposées de manière ordonnée dans un récipient 2 au moyen de l'extrémité mobile 6 du transporteur-remplisseur de boites 4. Les boites pliantes 3 sont alors généralement disposées selon au moins deux rangées de boites 3 les unes à côté des autres, redressées verticalement, les rangées étant séparées par une feuille d'encart 11a pliée (Fig. 3a).

La feuille d'encart 11a est une feuille, par exemple de carton, refoulée pour préformer au moins trois lignes de pliage L1, L2, L3 (Fig. 4a). Les lignes de pliage L1, L2, L3 sont parallèles entre elles. Une fois pliée, la feuille d'encart 11a présente un pli plan 12 perpendiculaire à une base plane formée par deux ailes latérales 13a, 13b de la feuille d'encart 11a, rapprochées l'une contre l'autre par pliage (Fig. 4b). La feuille d'encart 11a est dimensionnée pour qu'une fois pliée, la base plane présente des dimensions complémentaires à celles du fond 14 du récipient 2 (Figs. 3a, 3b). Les lignes de pliage L1, L2, L3 sont par exemple centrées pour que le pli plan 12 soit central, la section de la feuille d'encart 11a pliée et posée sur sa base, présentant alors une forme de « T » inversé.

D'autres formes de pliages sont envisageables pour la feuille d'encart 11.

La feuille d'encart 11b peut également être une feuille, par exemple de carton, restant plate pour pouvoir séparer deux étages de boîtes 2.

Par exemple, le pli plan 12 de la feuille d'encart 11 pliée peut ne pas être central, la feuille d'encart 11 pliée présentant une forme tridimensionnelle dissymétrique. Ce type d'encart peut présenter un intérêt par exemple dans le cas où les boites pliantes 3 sont disposées dans un sens sur une rangée et dans un autre sens sur l'autre rangée.

Selon un autre exemple, la feuille d'encart 11 présente deux fois trois lignes de pliage parallèles entre elles, séparées pour former une feuille d'encart 11 pliée présentant deux plis plans 12 parallèles entre eux. Les boites 3 sont alors disposées selon trois rangées dans le récipient 2.

La station de remplissage 1 comporte un dispositif d'encartage 10 permettant de saisir une feuille d'encart 11 sur une pile, de plier la feuille d'encart 11 selon les lignes de pliage L1, L2, L3, puis de disposer la feuille d'encart 11 pliée dans un récipient 2 vide avant qu'il ne soit rempli de boites pliantes 3. Ces opérations, également appelées « encartage », permettent de séparer et de maintenir les boites pliantes 3 dans le récipient 2 selon au moins deux rangées bien stables.

Pour cela, le dispositif d'encartage 10 comporte une tête de saisie et de pliage 15 et un moyen de déplacement pilotable 16 configuré pour déplacer la tête de saisie et de pliage 15 au moins selon un mouvement vertical, par exemple rectiligne, et selon un mouvement horizontal, par exemple également rectiligne.

Le dispositif d'encartage 10 comprend également un tapis permettant d'amener des paquets d'encarts successifs afin d'assurer un fonctionnement nonstop de l'encartage. Pendant que le dernier encart d'un paquet est saisi et inséré dans le récipient, le tapis avance et amène le paquet d'encart suivant.

Mieux visible sur la Fig. 6, la tête de saisie et de pliage 15 comporte au moins deux premiers éléments d'aspiration 17a, 17b, au moins deux deuxièmes éléments d'aspiration 18a, 18b, un premier et un deuxième élément linéaire 19a, 19b sur lesquels sont montés mobiles en coulissement les premiers et deuxièmes éléments d'aspiration 17a, 17b, respectivement, ainsi qu'un mécanisme d'actionnement 20 pilotable.

Dans l'exemple représenté sur les Figs. 6, 7a, 7b, 8a, 8b, 9, et selon l'invention, la tête de saisie et de pliage 15 comporte deux premiers éléments d'aspiration 17a, 17b, deux deuxièmes éléments d'aspiration 18a, 18b et deux éléments linéaires 19a, 19b. Un des premiers éléments d'aspiration 17a et un des deuxièmes éléments d'aspiration 18a sont montés en coulissement sur le premier élément linéaire 19a. L'autre des premiers éléments d'aspiration 17b et l'autre des deuxièmes éléments d'aspiration 18b sont montés en coulissement sur le deuxième élément linéaire 19b.

Les éléments d'aspiration 17a, 17b, 18a, 18b sont configurés pour saisir une feuille d'encart 11. Ils comportent des supports 23 respectifs, par exemple en forme d'équerre, aux extrémités inférieures desquels sont ménagés des orifices d'aspiration. Ces orifices d'aspiration s'inscrivent dans un plan horizontal.

Les orifices d'aspiration sont reliés à une source de vide, par exemple au moyen de tuyaux flexibles et d'au moins une vanne. La vanne, par exemple pilotable, peut être interposée entre la source de vide et les tuyaux flexibles et peut être contrôlée par une unité de pilotage 30 afin d'établir ou de couper une basse pression d'aspiration dans les orifices d'aspiration. Ainsi, lorsqu'une dépression est transmise aux orifices d'aspiration, une feuille d'encart 11 peut être saisie par succion.

Les éléments d'aspiration 17a, 17b, 18a, 18b peuvent également comporter des ventouses, agencées au niveau des orifices d'aspiration, pour faciliter la saisie de la feuille d'encart 11 en améliorant l'étanchéité entre la feuille d'encart 11 et les orifices d'aspiration.

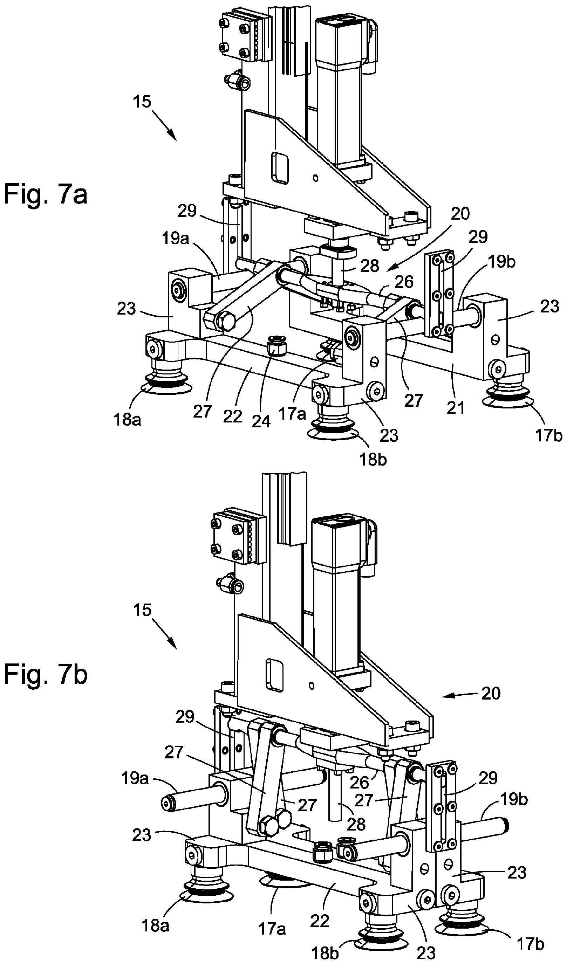

Au moins les premiers éléments d'aspiration 17a, 17b peuvent être déplacés en coulissement sur les éléments linéaires 19a, 19b par le mécanisme d'actionnement 20 entre une position de saisie (Figs. 7a, 8a et 6) et une position de pliage (Figs. 7b, 8b et 9).

Dans la position de saisie (Figs. 7a, 8a et 6), les premiers éléments d'aspiration 17a, 17b et les deuxièmes éléments d'aspiration 18a, 18b sont positionnés à l'écart les uns des autres. Cette position permet aux éléments d'aspiration 17a, 17b, 18a, 18b de pouvoir saisir une feuille d'encart 11 posée à plat, par succion des ailes latérales 13a, 13b.

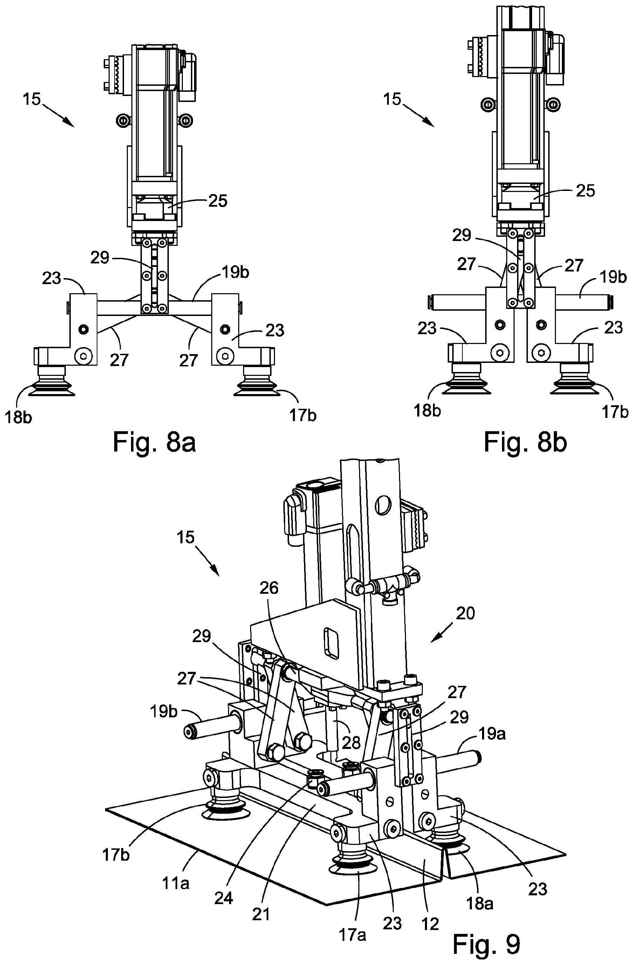

Dans la position de pliage (figures 7b, 8b et 9), les premiers éléments d'aspiration 17a, 17b et les deuxièmes éléments d'aspiration 18a, 18b sont rapprochés les uns des autres par rapport à la position de saisie. Ce rapprochement des éléments d'aspiration 17a, 17b, 18a, 18b permet de plier la feuille d'encart 11. Un interstice est ménagé entre les supports 23 des éléments d'aspiration 17a, 17b, 18a, 18b notamment pour éviter de coincer le pli plan 12 central (figures 8b et 9).

Selon l'invention, les deux premiers éléments d'aspiration 17a, 17b sont reliés entre eux par une première barre de support 21 et les deux deuxièmes éléments d'aspiration 18a, 18b sont reliés entre eux par une deuxième barre de support 22. Les barres de support 21, 22 permettent de procurer une bonne stabilité des éléments d'aspiration 17a, 17b, 18a, 18b ainsi qu'une bonne planéité des orifices d'aspiration. Un canal peut être ménagé dans les barres de support 21, 22 pour raccorder les orifices d'aspiration entre eux et à un raccord commun 24 de chaque barre 21, 22 auquel un tuyau flexible relié à la pompe peut être connecté.

Dans cet exemple ne faisant pas partie de l'invention, le mécanisme d'actionnement 20 est configuré pour également déplacer les deuxièmes éléments d'aspiration 18a, 18b en coulissement sur les éléments linéaires 19a, 19b entre la position de saisie et la position de pliage. Le mécanisme d'actionnement 20 selon l'invention est configuré pour permettre un déplacement simultané et de même amplitude des barres de support 21, 22 l'une vers l'autre, ce qui permet le pliage d'une feuille d'encart 11 avec un pli plan 12 central.

Les éléments linéaires 19a, 19b sur lesquels les éléments d'aspiration 17a, 17b sont montés en coulissement comportent par exemple chacun une tige cylindrique. Des trous cylindriques complémentaires sont par exemple ménagés dans les montants des supports 23 des éléments d'aspiration 17a, 17b, 18a, 18b.

Selon l'invention, le mécanisme d'actionnement 20 comporte un actionneur pilotable 25 et un système à biellettes.

Le système à biellettes comporte un axe transversal 26 mobile verticalement relié à l'actionneur pilotable 25 et au moins deux biellettes 27, quatre dans l'exemple.

Une première extrémité des biellettes 27 est reliée en pivotement à l'axe transversal 26 et une deuxième extrémité des biellettes 27 est reliée en pivotement à un élément d'aspiration 17a, 17b, 18a, 18b.

Dans l'exemple, chaque élément d'aspiration 17a, 17b, 18a, 18b est relié à l'axe transversal 26 par une biellette 27 respective, l'axe transversal 26 traversant des orifices cylindriques des premières extrémités des biellettes 27. Les deuxièmes extrémités des biellettes 27 sont montées en pivotement sur les supports 23, par exemple au moyen de pivots.

Les biellettes 27 sont toutes de même dimension, ce qui permet un déplacement simultané et de même amplitude des barres de support 21, 22 l'une vers l'autre ou à l'écart l'une de l'autre.

En fonctionnement, la descente de l'axe transversal 26 incline les biellettes 27 vers l'horizontale, écartant les premiers éléments d'aspiration 17a, 17b des deuxièmes éléments d'aspiration 18a, 18b. Au contraire, la montée de l'axe transversal 26 redresse les biellettes 27, resserrant l'ouverture en « V » entre les biellettes 27, ce qui rapproche les premiers éléments d'aspiration 17a, 17b des deuxièmes éléments d'aspiration 18a, 18b.

L'actionneur pilotable 25 comporte par exemple un moteur électrique.

Le mécanisme d'actionnement 20 comporte par exemple une vis 28 configurée pour être entrainée en rotation par le moteur électrique, la vis 28 étant insérée verticalement dans un filetage de l'axe transversal 26, perpendiculairement à celui-ci.

La vis 28 est par exemple une vis à billes. Des billes intercalées entre la vis 28 et l'axe transversal 26 assurent la fonction de roulement, ce qui permet de limiter les frottements et de réaliser des mouvements rapide.

Une rotation dans un premier sens du moteur électrique entraine la montée de l'axe transversal 26 (Fig. 7b) et une rotation dans le sens contraire entraine la descente de l'axe transversal 26 (Fig. 7a).

Selon un exemple de réalisation, le mécanisme d'actionnement 20 comporte en outre au moins une rainure (ou fente) de guidage 29 configurée pour coopérer avec une extrémité de l'axe transversal 26 pour guider le déplacement vertical de l'axe transversal 26. Deux rainures de guidage 29 peuvent ainsi coopérer avec une extrémité respective de l'axe transversal 26.

Ce mécanisme d'actionnement 20 est particulièrement simple à agencer, à fabriquer et est peu couteux.

Selon un autre exemple de réalisation, le mécanisme d'actionnement 20 comporte au moins un vérin pilotable, configuré pour déplacer les éléments d'aspiration. Le mécanisme d'actionnement comporte par exemple deux vérins, une extrémité de la tige mobile d'un vérin étant fixée à une barre de support 21, 22 respective.

Le dispositif d'encartage 10 peut en outre comporter une unité de pilotage 30, telle qu'un ordinateur, contrôleur ou microcontrôleur, comprenant une mémoire et des programmes permettant d'exécuter des suites d'instructions permettant notamment de commander le moyen de déplacement pilotable 16 et/ou le mécanisme d'actionnement 20 et/ou la mise sous vide dans les premiers et deuxièmes éléments d'aspiration 17a, 17b, 18a, 18b.

Selon un exemple de réalisation, le moyen de déplacement pilotable 16 comporte un guide rectiligne 31 fixé horizontalement à un bâti et un chariot 32, mobile en coulissement le long du guide rectiligne 31. Le guide rectiligne 31 est par exemple un rail, une crémaillère ou une courroie.

Le moyen de déplacement pilotable 16 comporte également un bras 33 s'étendant dans la direction verticale et à l'extrémité duquel est fixée la tête de saisie et de pliage 15. Le bras 33 est mobile verticalement dans un socle porté par le chariot 32.

Des moteurs du moyen de déplacement pilotable 16, pilotables, sont configurés pour déplacer le chariot 32 le long du guide rectiligne 31 et pour déplacer le bras 33 verticalement dans le socle.

Le moyen de déplacement pilotable 16 permet ainsi de piloter le déplacement vertical de la tête de pliage et de saisie 15 d'une part, au-dessus d'un poste de travail, pour descendre saisir une feuille d'encart 11 et remonter la feuille d'encart 11 et d'autre part, au-dessus d'une zone d'encartage E pour descendre la feuille d'encart 11 dans un récipient 2 et remonter la tête 15 délestée de sa feuille d'encart 11. Egalement, le moyen de déplacement pilotable 16 permet de piloter un déplacement horizontal rectiligne permettant le transport d'une feuille d'encart 11 du poste de travail vers la zone d'encartage E et le retour de la tête 15 de la zone d'encartage E au poste de travail pour saisir une nouvelle feuille d'encart 11.

Un tapis roulant 34 peut être prévu dans le poste de travail pour convoyer sans discontinuité des piles de feuilles d'encart 11 (Fig. 5).

La Fig. 6 illustre les différentes étapes d'un procédé de saisie, pliage et chargement d'une feuille d'encart 100 par le dispositif d'encartage 10.

L'unité de pilotage 30 commande le moyen de déplacement pilotable 16 pour positionner la tête de saisie et de pliage 16 au-dessus d'une feuille d'encart 11 posée à plat sur un poste de travail, les premier et deuxièmes éléments d'aspiration 17a, 17b, 18a, 18b étant positionnés à l'écart l'un de l'autre en position de saisie (étape 101).

Puis, l'unité de pilotage 30 commande la mise sous vide dans les premiers et deuxième éléments d'aspiration 17a, 17b, 18a, 18b pour saisir la feuille d'encart 11, la position de saisie permettant la saisie de la feuille d'encart 11 par succion au niveau des ailes latérales 13a, 13b (étape 102).

Puis, l'unité de pilotage 30 commande le moyen de déplacement pilotable 16 selon un déplacement vertical rectiligne pour soulever la tête de saisie et de pliage 16, puis selon un déplacement horizontal rectiligne pour la diriger dans la zone d'encartage E où un récipient 2 vide et ouvert est acheminé par le convoyeur de récipients 5 (étape 103).

L'unité de pilotage 30 commande alors la rotation du moteur électrique pour monter l'axe transversal 26 (Fig. 7b) et ainsi redresser les biellettes 27. Les premiers et deuxièmes éléments d'aspiration 17a, 17b, 18a, 18b coulissent l'un vers l'autre sur les éléments linéaires 19a, 19b, rapprochant entre eux les premiers éléments d'aspiration 17a, 17b et les deuxièmes éléments d'aspiration 18a, 18b, ce qui permet le pliage de la feuille d'encart 11 saisie (Fig. 9, étape 104).

Ce pliage peut être réalisé au vol, c'est à-dire au cours du transport de la feuille d'encart 11 vers la zone d'encartage E et notamment au cours du déplacement horizontal de la tête de saisie et de pliage 15.

L'unité de pilotage 30 commande ensuite le moyen de déplacement pilotable 16 verticalement pour descendre la tête de saisie et de pliage 16 dans le récipient 2 (étape 105).

Le vide est maintenu dans les éléments d'aspiration 17a, 17b, 18a, 18b jusqu'à ce que la tête 15 ait placé la feuille d'encart 11 au fond du récipient 2. Puis, l'unité de pilotage 30 commande l'arrêt de la mise sous vide pour relâcher la feuille d'encart 11 (étape 106). Un flux d'air peut être éventuellement injecté pour faciliter la libération et la pose de la feuille d'encart 11. La feuille d'encart 11 reste pliée dans le récipient 2 avec le pli plan 12 maintenu à la verticale par coopération du fond 14 et des ailes latérales 13a, 13b (Fig. 3b).

L'unité de pilotage 30 pilote alors la remontée de la tête de saisie et de pliage 15 et pilote une rotation dans le sens contraire du moteur électrique pour descendre l'axe transversal 26, la descente de celui-ci étant guidé par les rainures de guidage 29. La descente de l'axe transversal 26 incline les biellettes 27 vers l'horizontale, écartant les premiers éléments d'aspiration 17a, 17b des deuxièmes éléments d'aspiration 18a, 18b.

Cette commande en position de saisie peut être réalisée au vol, lors de la remontée verticale de la tête de saisie et de pliage 15.

Le récipient 2 contenant une feuille d'encart 11 pliée peut alors être acheminé par le convoyeur de récipients 5 le long du trajet d'acheminement La jusqu'à la zone de remplissage B où il pourra réceptionner des boites pliantes 3 acheminées par le transporteur-remplisseur de boites 4.

L'encartage peut ainsi être effectué de manière automatique, à cadence élevée et sans nécessiter l'intervention d'un opérateur. Les feuilles d'encart 11 peuvent ainsi être pliées rapidement et correctement pour être placées dans le bon sens dans les récipients 2.

Bien que les figures représentent une tête de saisie et de pliage 15 comportant deux premiers éléments d'aspiration 17a, 17b et deux deuxièmes éléments d'aspiration 18a, 18b et que le mécanisme d'actionnement 20 soit configuré pour également déplacer les deuxièmes éléments d'aspiration 18a, 18b, d'autres réalisations sont envisageables.

Par exemple, dans un mode de réalisation ne faisant pas partie de l'invention, la tête de saisie et de pliage 15 peut ne comporter qu'un seul premier élément d'aspiration 17a, un seul deuxième élément d'aspiration 18a, 18b et donc un seul élément linéaire 19a sur lequel au moins le premier élément d'aspiration 17a est monté mobile en coulissement. Ce mode de réalisation peut convenir par exemple dans le cas de feuilles d'encart 11 de petit format, les orifices d'aspiration et/ou ventouses présentant des surfaces de contact aux dimensions suffisantes pour saisir fermement la feuille d'encart 11.

Selon un autre exemple ne faisant pas partie de l'invention, le mécanisme d'actionnement 20 est configuré pour déplacer seulement un ou plusieurs premiers éléments d'aspiration 17a, 17b à l'encontre de un ou plusieurs deuxièmes éléments d'aspiration 18a, 18b qui restent fixes. Ce mode de réalisation peut présenter un intérêt notamment pour une feuille d'encart 11 dont le pli plan 12 est dissymétrique.

Selon encore un autre exemple de réalisation ne faisant pas partie de l'invention, la tête de saisie et de pliage 15 comporte au moins un premier élément d'aspiration 17a, 17b, au moins un deuxième élément d'aspiration 18a, 18b et au moins un troisième élément d'aspiration. Le mécanisme d'actionnement 20 est alors configuré pour déplacer le premier et le troisième éléments d'aspiration en coulissement sur le au moins un élément linéaire 19a, 19b à l'encontre du deuxième élément d'aspiration central et fixe. Ce mode de réalisation peut présenter un intérêt notamment pour une feuille d'encart 11 pliée avec deux plis plans 12 parallèles.

## Revendications

1. Tête de saisie (15) de feuilles d'encart (11) pour l'encartage entre rangées de boites pliantes (3) dans un récipient (2), comprenant :
- au moins deux premiers éléments d'aspiration (17a, 17b) configurés pour saisir une feuille d'encart (11),
- au moins deux deuxièmes éléments d'aspiration (18a, 18b) configurés pour saisir la feuille d'encart (11),
la tête étant **caractérisée en ce qu'**elle comprend :
- un premier et un deuxième élément linéaire (19a, 19b) sur lesquels sont montés mobiles en coulissement les premiers et deuxièmes éléments d'aspiration (17a, 17b ; 18a, 18b), respectivement,
- un mécanisme d'actionnement (20) pilotable, configuré pour déplacer les éléments d'aspiration (17a, 17b ; 18a, 18b) en coulissement sur les éléments linéaires (19a, 19b) dans une position de saisie dans laquelle les premiers éléments d'aspiration (17a, 17b) et les deuxièmes éléments d'aspiration (18a, 18b) sont positionnés à l'écart les uns des autres pour saisir la feuille d'encart (11),
et dans laquelle le mécanisme d'actionnement (20) comporte un actionneur pilotable (25) et un système à biellettes comportant un axe transversal (26) mobile verticalement, relié à l'actionneur pilotable (25), et deux biellettes (27) dont une première extrémité est reliée en pivotement à l'axe transversal (26), et une deuxième extrémité est reliée en pivotement aux premiers et deuxièmes éléments d'aspiration (17a, 17b ; 18a, 18b),
et dans laquelle les deux premiers éléments d'aspiration (17a, 17b) sont reliés entre eux par une première barre de support (21) et les deux deuxièmes éléments d'aspiration (18a, 18b) sont reliés entre eux par une deuxième barre de support (22),
le mécanisme d'actionnement (20) étant configuré pour permettre un déplacement simultané et de même amplitude des barres de support (21, 22) l'une vers l'autre.

2. Tête selon la revendication 1, dans laquelle le mécanisme d'actionnement (20) pilotable, est configuré pour déplacer les éléments d'aspiration (17a, 17b ; 18a, 18b) en coulissement sur les éléments linéaires (19a, 19b) entre:
- la position de saisie dans laquelle les premiers éléments d'aspiration (17a, 17b) et les deuxièmes éléments d'aspiration (18a, 18b) sont positionnés à l'écart les uns des autres pour saisir une feuille d'encart (11), et
- une position de pliage dans laquelle les au moins deux premiers éléments d'aspiration (17a, 17b) et les au moins deux deuxièmes éléments d'aspiration (18a, 18b) sont rapprochés les uns des autres par rapport à la position de saisie, pour plier la feuille d'encart (11).

3. Tête selon l'une des revendications précédentes, dans laquelle l'actionneur pilotable (25) comporte un moteur électrique et le mécanisme d'actionnement (20) comporte une vis (28) configurée pour être entrainée en rotation par le moteur électrique, la vis (28) étant insérée dans un filetage de l'axe transversal (26) de sorte qu'une rotation dans un premier sens du moteur électrique entraine une montée de l'axe transversal (26) et une rotation dans le sens contraire entraine une descente de l'axe transversal (26).

4. Tête selon l'une des revendications précédentes, dans laquelle le mécanisme d'actionnement (20) comporte au moins une rainure de guidage (29) configurée pour coopérer avec une extrémité de l'axe transversal (26) pour guider le déplacement vertical de l'axe transversal (26).

5. Dispositif d'encartage (10) de feuilles d'encart (11) comportant une tête de saisie (15) selon l'une des revendications précédentes.

6. Dispositif selon la revendication 5, comportant un moyen de déplacement pilotable (16) configuré pour déplacer la tête (15) au moins selon un mouvement vertical et selon un mouvement horizontal.

7. Dispositif selon la revendication 5 ou 6, comportant une unité de pilotage (30) configurée pour commander le moyen de déplacement pilotable (16) et/ou le mécanisme d'actionnement (20) et/ou la mise sous vide dans les premiers et deuxièmes éléments d'aspiration (17a, 17b, 18a, 18b) de la tête (15).

8. Station de remplissage (1) pour le remplissage de récipients (2) par des boites pliantes (3), comportant un dispositif d'encartage (10) de feuilles d'encart (11) selon l'une des revendications 5 à 7.

9. Procédé de saisie, pliage et chargement d'une feuille d'encart (100) par un dispositif d'encartage (10) selon l'une des revendications 5 à 7, dans lequel:
- on positionne la tête de saisie (15) au-dessus d'une feuille d'encart (11), au moins deux premiers et au moins deux deuxièmes éléments d'aspiration (17a, 17b, 18a, 18b) étant positionnés à l'écart l'un de l'autre en position de saisie (étape 101).
- on commande la mise sous vide dans les au moins deux premiers et au moins deux deuxièmes éléments d'aspiration (17a, 17b, 18a, 18b) pour saisir la feuille d'encart (étape 102).
- on soulève la tête (15) et on la dirige vers un récipient (2) (étape 103),
- on fait coulisser les éléments d'aspiration (17a) pour positionner les éléments d'aspiration (17a, 17b) en position de pliage de manière à plier la feuille d'encart (11) (étape 104),
- on positionne la tête (15) portant la feuille d'encart (11) pliée dans le récipient (2) (étape 105),
- on commande l'arrêt de la mise sous vide dans les premiers et deuxième éléments d'aspiration (17a, 17b, 18a, 18b) pour relâcher la feuille d'encart (11) pliée dans le récipient (2) (étape 106).

10. Procédé selon la revendication 9, dans lequel le pliage de la feuille d'encart (11) est réalisé au vol au cours du transport de la feuille d'encart (11) vers le récipient (2).

## Patentansprüche

1. Aufnahmekopf (15) für Einlagen (11) zum Einlegen zwischen Reihen von Faltschachteln (3) in einem Behälter (2), Folgendes umfassend:
- mindestens zwei erste Saugelemente (17a, 17b), die konfiguriert sind, um eine Einlage (11) aufzunehmen,
- mindestens zwei zweite Saugelemente (18a, 18b), die konfiguriert sind, um die Einlage (11) aufzunehmen,
wobei der Kopf **dadurch gekennzeichnet ist, dass** er Folgendes umfasst:
- ein erstes und ein zweites lineares Element (19a, 19b), auf denen jeweils die ersten und zweiten Saugelemente (17a, 17b; 18a, 18b) gleitend gelagert sind,
- einen steuerbaren Betätigungsmechanismus (20), der konfiguriert ist, um die Saugelemente (17a, 17b ; 18a, 18b) durch Gleiten auf den linearen Elementen (19a, 19b) in eine Aufnahmeposition zu bewegen, in der die ersten Saugelemente (17a, 17b) und die zweiten Saugelemente (18a, 18b) im Abstand voneinander positioniert sind, um die Einlage (11) aufzunehmen, wobei der Betätigungsmechanismus (20) eine steuerbare Stelleinrichtung (25) und ein Schwingarmsystem umfasst, das eine vertikal bewegliche Querachse (26), die mit der steuerbaren Stelleinrichtung (25) verbunden ist, und zwei Schwingarme (27), von denen ein erstes Ende schwingend mit der Querachse (26) verbunden ist und ein zweites Ende schwingend mit den ersten und zweiten Saugelementen (17a,17b ;18a, 18b) verbunden ist, umfasst, und wobei die zwei ersten Saugelemente (17a, 17b) untereinander durch eine erste Trägerstange (21) verbunden sind und die zweiten Saugelemente (18a, 18b) untereinander durch eine zweite Trägerstange (22) verbunden sind, wobei der Betätigungsmechanismus (20) konfiguriert ist, um eine gleichzeitige Bewegung über dieselbe Strecke der Trägerstangen (21, 22) aufeinander zu zu ermöglichen.

2. Kopf nach Anspruch 1, wobei der steuerbare Betätigungsmechanismus (20) konfiguriert ist, um die Saugelemente (17a, 17b ; 18a, 18b) durch Gleiten auf den linearen Elementen (19a, 19b) zwischen folgenden Positionen zu bewegen:
- der Aufnahmeposition, wobei die ersten Saugelemente (17a, 17b) und die zweiten Saugelemente (18a, 18b) im Abstand voneinander positioniert sind, um eine Einlage (11) aufzunehmen, und
- einer Faltposition, wobei die mindestens zwei ersten Saugelemente (17a, 17b) und die mindestens zwei zweiten Saugelemente (18a, 18b) in Bezug auf die Aufnahmeposition aufeinander zubewegt werden, um die Einlage (11) zu falten.

3. Kopf nach einem der vorhergehenden Ansprüche, wobei die steuerbare Stelleinrichtung (25) einen elektrischen Motor umfasst und der Betätigungsmechanismus (20) eine Schraube (28) umfasst, die konfiguriert ist, um vom elektrischen Motor gedreht zu werden, wobei die Schraube (28) so in ein Gewinde der Querachse (26) eingeführt ist, dass eine Drehung des elektrischen Motors in eine erste Richtung das Anheben der Querachse (26) bewirkt und eine Drehung in die entgegengesetzte Richtung ein Absenken der Querachse (26) bewirkt.

4. Kopf nach einem der vorhergehenden Ansprüche, wobei der Betätigungsmechanismus (20) mindestens eine Führungsnut (29) umfasst, die konfiguriert ist, um mit einem Ende der Querachse (26) zusammenzuwirken, um die vertikale Bewegung der Querachse (26) zu führen.

5. Einlagevorrichtung (10) für Einlagen (11), umfassend einen Aufnahmekopf (15) nach einem der vorhergehenden Ansprüche.

6. Vorrichtung nach Anspruch 5, umfassend ein steuerbares Bewegungsmittel (16), das konfiguriert ist, um den Kopf (15) mindestens in einer vertikalen Bewegung und einer horizontalen Bewegung zu bewegen.

7. Vorrichtung nach Anspruch 5 oder 6, umfassend eine Steuereinheit (30), die konfiguriert ist, um das steuerbare Bewegungsmittel (16) und/oder den Betätigungsmechanismus (20) und/oder den Vakuumaufbau in den ersten und zweiten Saugelementen (17a, 17b, 18a, 18b) des Kopfes (15) zu steuern.

8. Befüllstation (1) zum Befüllen von Behältern (2) mit Faltschachteln (3), umfassend eine Einlagevorrichtung (10) für Einlagen (11) nach einem der Ansprüche 5 bis 7.

9. Verfahren zur Aufnahme, zum Falten und zum Laden einer Einlage (100) durch eine Einlagevorrichtung (10) nach einem der Ansprüche 5 bis 7, wobei:
- der Aufnahmekopf (15) über einer Einlage (11) positioniert wird, wobei die mindestens zwei ersten und die mindestens zwei zweiten Saugelemente (17a, 17b, 18a, 18b) in der Aufnahmeposition im Abstand voneinander positioniert sind (Schritt 101),
- der Vakuumaufbau in den mindestens zwei ersten und den mindestens zwei zweiten Saugelementen (17a, 17b, 18a, 18b) zur Aufnahme der Einlage gesteuert wird (Schritt 102),
- der Kopf (15) angehoben wird und zu einem Behälter (2) gelenkt wird (Schritt 103),
- die Saugelemente (17a) verschoben werden, um die Saugelemente (17a, 17b) in die Faltposition zu verbringen, um die Einlage (11) zu falten (Schritt 104),
- der Kopf (15) mit der gefalteten Einlage (11) im Behälter (2) positioniert wird (Schritt 105),
- das Anhalten des Vakuumaufbaus in den ersten und zweiten Saugelementen (17a, 17b, 18a, 18b) gesteuert wird, um die gefaltete Einlage (11) in den Behälter (2) freizulassen (Schritt 106).

10. Verfahren nach Anspruch 9, wobei die Faltung der Einlage (11) im laufenden Betrieb beim Transport der Einlage (11) zum Behälter (2) durchgeführt wird.

## Claims

1. Grasping head (15) for grasping insert sheets (11) for insertion between rows of folding boxes (3) in a container (2), the grasping head comprising:
- at least two first suction elements (17a, 17b) configured to grasp an insert sheet (11),
- at least two second suction elements (18a, 18b) configured to grasp the insert sheet (11),
the grasping head being **characterised in that** it comprises:
- a first and second linear element (19a, 19b) on which are movably mounted to slide the first and second suction elements (17a, 17b; 18a, 18b) respectively,
- a controllable actuating mechanism (20), configured to slide the suction elements (17a, 17b; 18a, 18b) on the linear elements (19a, 19b) into a grasping position in which the first suction elements (17a, 17b) and the second suction elements (18a, 18b) are positioned in a manner spaced apart from one another in order to grasp the insert sheet (11),
and in which the actuating mechanism (20) comprises a controllable actuator (25) and a rod system comprising a vertically movable transverse axis (26), connected to the controllable actuator (25), and two rods (27) of which a first end is pivotably connected to the transverse axis (26), and a second end is pivotably connected to the first and second suction elements (17a, 17b; 18a, 18b),
and in which the two first suction elements (17a, 17b) are connected to one another by a first support bar (21) and the two second suction elements (18a, 18b) are connected to one another by a second support bar (22), the actuating mechanism (20) being configured to allow a simultaneous movement and of the same amplitude of the support bars (21, 22) towards one another.

2. Grasping head according to claim 1, in which the controllable actuating mechanism (20) is configured to slide the suction elements (17a, 17b; 18a, 18b) on the linear elements (19a, 19b) between:
- the grasping position in which the first suction elements (17a, 17b) and the second suction elements (18a, 18b) are positioned in a manner spaced apart from one another to grasp an insert sheet (11), and
- a folding position in which the at least two first suction elements (17a, 17b) and the at least two second suction elements (18a, 18b) are moved closer to one another with respect to the grasping position, to fold the insert sheet (11).

3. Grasping head according to one of the preceding claims, in which the controllable actuator (25) comprises an electric motor and the actuating mechanism (20) comprises a screw (28) configured to be rotated by the electric motor, the screw (28) being inserted in a thread of the transverse axis (26) such that a rotation in a first direction of the electric motor leads to the transverse axis (26) rising and a rotation in the opposite direction leads to the transverse axis (26) descending.

4. Grasping head according to one of the preceding claims, in which the actuating mechanism (20) comprises at least one guiding groove (29) configured to engage with an end of the transverse axis (26) to guide the vertical movement of the transverse axis (26).

5. Device for inserting (10) insert sheets (11) comprising a grasping head (15) according to one of the preceding claims.

6. Device according to claim 5, comprising a controllable movement means (16) configured to move the grasping head (15) at least in a vertical movement and in a horizontal movement.

7. Device according to claim 5 or 6, comprising a control unit (30) configured to control the controllable movement means (16) and/or the actuating (20) and/or the vacuuming mechanism in the first and second suction elements (17a, 17b, 18a, 18b) of the grasping head (15).

8. Filling station (1) for the filling of containers (2) by folding boxes (3), comprising a device for inserting (10) insert sheets (11) according to one of claims 5 to 7.

9. Method for grasping, folding and loading an insert sheet (100) with an insertion device (10) according to one of claims 5 to 7, in which:
- the grasping head (15) is positioned above an insert sheet (11), at least two first and at least two second suction elements (17a, 17b, 18a, 18b) being positioned in a manner spaced apart from one another in the grasping position (step 101),
- the vacuuming is controlled in the at least two first and at least two second suction elements (17a, 17b, 18a, 18b) to grasp the insert sheet (step 102),
- the head (15) is raised and it is directed towards a container (2) (step 103),
- the suction elements (17a) are slid to position the suction elements (17a, 17b) in the folding position so as to fold the insert sheet (11) (step 104),
- the head (15) is positioned carrying the insert sheet (11) folded into the container (2) (step 105),
- the stopping of the vacuuming in the first and second suction elements (17a, 17b, 18a, 18b) is controlled to release the insert sheet (11) folded into the container (2) (step 106).

10. Method according to claim 9, in which the folding of the insert sheet (11) is carried out in flight during the transport of the insert sheet (11) towards the container (2).
